# FASCICULE DE BREVET EUROPEEN

(11) **EP 2 361 223 B1**
(45) Date de publication et mention de la délivrance du brevet: **27.02.2019**
(21) Numéro de dépôt: 09752826.9
(22) Date de dépôt: 17.11.2009
(51) Int. Cl.: C01B 33/32, C09K 21/02

(54) **DÉSHYDRATATION DE SILICATE ALCALIN**
Dehydrierung von Alkalisilikat
Alkali silicate dehydration

(30) Priorité: 17.11.2008 EP 08169285
(43) Date de publication de la demande: 31.08.2011
(73) Titulaire: AGC Glass Europe, 1348 Louvain-la-Neuve (BE)
(72) Inventeur: GOELFF, Pierre, B-6040 Jumet (BE); JORDAN, Eric, B-6040 Jumet (BE)
(74) Mandataire: Le Vaguerèse, Sylvain Jacques
(86) Numéro de dépôt international: PCT/EP2009/065273
(87) Numéro de publication internationale: WO 2010/055166

(56) Documents cités:
- WO-A-2006/092426
- WO-A-2007/060203
- WO-A-2007/144369
- FR-A- 2 561 171
- US-A- 4 304 052
- US-A- 4 676 998

## Description

La présente invention concerne le traitement de silicates alcalins tels que ceux utilisés pour la production de matériaux intumescents entrant dans la composition de vitrages anti-feu.

Les vitrages anti-feu les plus répandus sont constitués de feuilles de verre entre lesquelles sont disposées des couches de matériaux qui ont la propriété de former des mousses réfractaires sous l'action de la chaleur. Lors de l'exposition au feu l'eau de ces matériaux s'évapore créant une mousse opaque au rayonnement thermique et peu conductrice de la chaleur. De ce fait la ou les feuilles de verre qui se situent au-delà de cette mousse par rapport au feu, ne sont pas exposées au choc thermique et font obstacle au passage des fumées et des flammes.

La préparation de ces matériaux intumescents dans la production de ces vitrages anti-feu comprend nécessairement le passage d'une composition fluide à base de silicates alcalins, à un état solide. Ce passage est obtenu soit par séchage d'une couche de la composition fluide appliquée sur une feuille de verre, soit en partant d'une composition dont la prise en masse s'effectue spontanément après sa mise en place entre les feuilles de verre.

Dans le premier cas en l'absence de séchage la composition de départ reste à l'état fluide. La teneur en eau après séchage est réduite de façon relativement importante. La variation est d'ordinaire de plus de 20%. De façon typique à partir d'une solution de silicate comprenant en pourcentage pondéral plus 55% et même le cas échéant plus de 60% d'eau, le séchage conduit à une couche sèche dont la teneur en eau est ramenée à moins de 30%.

Une variante du séchage de la solution décrite dans US 4 304 052 consiste à effectuer ce séchage en atmosphère de gaz non soluble dans la solution pour prévenir la formation ultérieure de bulles dans la couche intumescente. Un autre mode de séchage très rapide sur tambour chauffé est présenté dans FR 2 561 171 et conduit à un matériau solide qui peut être reconstitué en couche ultérieurement.

Dans le second cas la composition typique comprend au plus de l'ordre de 50% en poids d'eau. Cette teneur est établie en tenant compte d'une part de la nécessité d'utiliser des compositions qui présentent un caractère "réfractaire" certain, caractère que traduit le rapport molaire SiO₂/M₂O (M étant le métal alcalin), et de ce que la stabilité de la composition requiert une teneur en eau d'autant plus élevée que ce rapport molaire est plus élevé.

En pratique pour des rapports molaires de l'ordre de 3,5 à 5, la teneur en eau de la composition capable de prendre en masse spontanément présente une teneur en eau de l'ordre de 40 à 48% en poids. Ces caractéristiques ne sont pas celles des silicates industriels disponibles dans le commerce. L'obtention de ces compositions nécessite donc un traitement préalable. Ce traitement peut suivre deux voies principales selon que l'on utilise ou non des silicates industriels. Des solutions intermédiaires sont aussi possibles qui correspondent à l'utilisation de proportions variées de ces silicates industriels en tant que source de silice.

Si l'on utilise des silicates industriels, pour avoir un rapport molaire élevé, la teneur en eau est également élevée. A titre indicatif des silicates industriels dont le rapport molaire est de 3,3 présentent une teneur en eau de l'ordre de 65%. Pour un rapport molaire de 2 la teneur en eau est de l'ordre de 45%. Ces valeurs correspondent à des produits qui peuvent être stockés sur de très longues périodes sans risque de prise en masse. Des proportions différentes peuvent être obtenues qui se rapprochent des conditions dans lesquelles la composition devient moins stable. Ainsi pour les rapports molaires de 3,3 la composition peut ne contenir que de l'ordre de 55% d'eau. Il reste que de telles compositions sont encore trop riches en eau pour constituer spontanément des gels.

Pour former les couches non séchées - c'est la seconde voie - les compositions peuvent être obtenues par réaction de silice en suspension et d'hydroxyde alcalin. Leur teneur en eau peut ainsi être moins importante, voire correspondre à la teneur en eau dans la couche finale. En conséquence ces compositions doivent être utilisées à bref délai.

La préparation peut encore être faite en combinant les deux voies indiquées précédemment. Il s'agit par exemple d'ajouter une suspension de silice colloïdale à une solution de silicates industrielle pour accroître le rapport molaire de la solution de silicate. La préparation peut aussi se faire en combinant une solution de silicate industrielle avec une autre obtenue par réaction d'hydroxyde et de silice et de rapport molaire élevé.

Dans tous les cas envisagés une difficulté est de constituer une composition permettant le passage de l'état fluide à l'état solide en satisfaisant à deux exigences a priori contradictoires à savoir, une bonne stabilité à l'état fluide de la composition aussi longtemps que nécessaire, et une fois la mise en place de la composition réalisée, le durcissement le plus rapide possible de cette composition, pour écourter le processus.

L'invention propose un mode de production d'une solution destinée à un séchage ultérieur, mode tel que défini à la revendication 1.

Selon l'invention ce contrôle du changement d'état de la composition comprend avantageusement, une adaptation de la teneur en eau peu de temps avant l'utilisation de la composition. La teneur en eau de la composition est ajustée selon l'invention partant d'une composition dont la teneur en eau est de préférence un peu supérieure à celle qui est recherchée pour la couche intumescente du vitrage. L'ajustement de la teneur en eau de la composition est obtenu par déshydratation conduite soit par "lots" de composition, soit en continu.

Ordinairement la déshydratation est conduite peu de temps avant l'utilisation, lorsque le but est d'atteindre la teneur en eau qui doit finalement se trouver dans la couche intumescente finale, de telle sorte qu'ultérieurement cette composition soit en mesure de se solidifier sans autre opération qu'une accélération du durcissement par une élévation de la température.

Au stade auquel la déshydratation conduit, à savoir un état hydrique voisin de la composition finale, le traitement doit être bien maîtrisé. En particulier le contrôle de la teneur en eau de l'ensemble de la composition de même que sa température doivent être ajustée à tout moment pour prévenir le risque d'une prise en masse prématurée. Pour cette raison la déshydratation doit être suffisamment progressive. A l'inverse, les impératifs de productivité ou de coûts, imposent de limiter la durée de l'opération le plus possible.

Pour parvenir à satisfaire à ces diverses contraintes, selon l'invention la déshydratation est conduite dans un dispositif d'évaporation à température contrôlée sous agitation permanente et sous pression réduite.

La formation du gel solide à partir des compositions déshydratées selon l'invention, est très largement accélérée lorsque la température est accrue. Pour cette raison, bien que la déshydratation soit aussi accélérée par élévation de la température, il faut bien maîtriser cette dernière pour éviter la prise en masse avant l'utilisation de la composition et notamment dans l'appareillage dans lequel on opère la déshydratation.

Cette sensibilité des compositions préparées à toute élévation de température, limite en pratique la température de la composition au cours de la déshydratation. Celle-ci est avantageusement maintenue inférieure ou au plus égale à 60°C en tout point de la composition. Ceci vaut pour une composition constituant une masse rassemblée, ceci vaut également pour la composition qui peut être étalée sous forme d'un film de moindre épaisseur comme ceux qui peuvent être réalisés pour améliorer les échanges thermiques au travers d'une paroi revêtue de la composition à déshydrater, ou aussi pour maximiser la surface d'évaporation.

De préférence la température de la composition au cours de la déshydratation n'excède pas 50°C.

En pratique cependant, du fait de la chaleur latente de vaporisation, même en réalisant un échange thermique à une température supérieure, la composition peut être ramenée à des températures adéquates. Ainsi la température des moyens mis en oeuvre pour conduire l'évaporation peut se trouver supérieure de 20 à 30°C par rapport à la température de la composition elle-même.

L'évaporation à des températures aussi peu élevées serait certainement très longue si elle était effectuée à pression ambiante. Pour accroître la vitesse d'évaporation il est avantageux de procéder à pression réduite. La pression choisie est de préférence de 1 à 100hPa, et avantageusement de 1 à 20hPa.

Le fait de procéder à la déshydratation sous pression réduite permet en outre de contribuer au dégazage de la composition. Ce dégazage est particulièrement utile lorsque la préparation de la composition comprend l'utilisation de silice colloïdale. Les particules de silice, notamment en raison de leurs caractéristiques de surface, peuvent avoir tendance à absorber des gaz qui peuvent ultérieurement être libérés formant des bulles indésirables. L'utilisation d'une évaporation sous une pression faible favorise l'élimination de ces gaz, et réduit le risque d'apparition de bulles.

Dans la mesure où la composition est destinée à former un gel sans séchage après qu'elle ait été appliquée dans ou sur les vitrages, la composition après déshydratation présente une teneur en eau comprise entre 35 et 43% en poids.

La teneur en eau de la composition de départ peut être très variable. Pour ne pas prolonger inutilement cette opération on utilise de préférence des compositions dont la teneur en eau ne dépasse pas 60% et de préférence pas 55% en poids.

Comme il est préférable de limiter la déshydratation, la teneur en eau avant déshydratation est de préférence telle que la variation de cette teneur avant et après déshydratation soit au plus de 20% et avantageusement au plus de 14% en poids.

Pour favoriser l'évaporation par ailleurs le surface libre est avantageusement aussi étendue que possible. Les dimensions des appareillages sont nécessairement limitées, aussi l'augmentation de la surface d'échange passe par une distribution de la composition sous forme d'un film renouvelé en permanence sur une surface de l'appareillage utilisé aussi large que possible pour favoriser l'équilibre qui s'établit entre la composition que l'on déshydrate et l'atmosphère au contact de cette composition.

Le renouvellement permanent de la surface d'échange évite aussi une distribution non homogène de la teneur en eau par suite de l'évaporation qui touche nécessairement une épaisseur limitée de la composition à son interface.

La distribution de la composition dans l'appareillage de déshydratation en continu est avantageusement réalisée sous forme d'un film dont l'épaisseur n'est pas supérieure à 3mm et de préférence pas supérieure à 2mm.

La conduite de la déshydratation doit être suivie de manière précise. Pour connaître l'état de la composition au cours de cette opération un moyen consiste à suivre la variation de la quantité d'eau évaporée et recueillie après condensation. Cette mesure peut être effectuée aussi bien sur des opérations réalisées en continu que sur des lots.

Dans les opérations effectuées par lots, il est aussi possible de suivre la variation de poids de la composition en cours de déshydratation.

Dans les modes préférés, la durée de l'opération est une donnée importante pour l'économie du procédé mais aussi pour sa conduite technique. La maîtrise de l'opération doit éviter les risques de prise en masse prématurée. L'opération, en particulier à la fin de la déshydratation conduit la composition dans un état voisin de celui qui permet la gélification spontanée rapide. Le maintien d'un traitement prolongé est donc peu souhaitable. A l'inverse un traitement rapide est comme indiqué précédemment obtenu par une élévation de température laquelle favorise aussi la gélification. Il faut donc établir un compromis entre deux exigences contradictoires.

Par ailleurs le coût de la production en est d'autant moindre que pour une même capacité, le dimensionnement de l'installation peut être réduit ce qui tend à favoriser une opération aussi brève que possible.

La durée du traitement est fonction de la teneur en eau de départ et celle de la composition finale. Intervient aussi le fait que la déshydratation s'opère d'autant moins vite que la teneur en eau devient plus faible. Autrement le temps de traitement n'est pas seulement proportionnel au pourcentage d'eau éliminé.

A titre indicatif il est préféré de faire en sorte lorsque la déshydratation s'effectue en continu sur des films minces, qu'elle ne se prolonge pas au-delà de cinq minutes.

Dans les opérations sur des lots la durée dépend bien évidemment du volume du lot considéré.

De manière préférée, pour des raisons notamment de performance au feu, les rapports molaires dans les couches intumescentes sont avantageusement supérieurs à 3. Ils sont le plus souvent compris entre 3 et 7, et le plus généralement entre 3 et 5. Ces rapports sont ceux également de la composition sur laquelle s'effectue la déshydratation selon l'invention.

A ces rapports molaires, pour constituer les couches intumescentes sans séchage, les teneurs en eau des compositions utilisées se situent avantageusement entre 25 et 45% et de préférence entre 30 et 40%. Pour atteindre ces valeurs les compositions initiales qui subissent la déshydratation ont une teneur en eau qui n'est pas supérieure à 55% et de préférence pas supérieure à 50%.

La déshydratation est conduite de préférence comme l'étape qui précède directement l'utilisation pour constituer la couche intumescente. Cette dernière peut avantageusement contenir des éléments additionnels destinés à améliorer les propriétés recherchées. De façon usuelle les couches intumescentes renferment des composés tels que les polyols, notamment de la glycérine ou de l'éthylène glycol, pour améliorer des propriétés diverses suivant la composition globale.

Pour les compositions les plus riches en eau un rôle important est celui de prévenir la dégradation du vitrage soumis à des températures très basses notamment inférieures à - 20°C. Dans les compositions présentant une teneur en eau relativement faible la présence de ces polyols améliore les caractéristiques mécaniques par une sorte de plastification de la couche.

Les polyols en question sont introduits en proportions pondérales très variables notamment pour les raisons indiquées ci-dessus. Cette teneur ne dépasse pas de préférence 18% en poids de la couche intumescente, et de préférence ne dépasse pas 15%.

D'autres additifs sont utilisés traditionnellement dans les compositions intumescentes comme les produits aminés qui améliorent leur stabilité dans le temps et la réaction au feu, notamment pour ce qui concerne leur transparence. Des composés traditionnels sont par exemple l'urée, le TMAH (tétraméthyl-hydroxyl-amonium). Ces composés sont introduits de préférence en quantité qui ne dépasse pas 3% en poids dans la couche intumescente.

D'autres constituants sont également éventuellement introduits de manière usuelle. Il s'agit notamment de composés de type silanes, qui contribuent aussi à la structure de la couche en améliorant leurs caractéristiques mécaniques. Des produits du type TEOS, ou MTEOS sont connus dans ces applications. Leur teneur est aussi de préférence au plus égale à 5% en poids de la couche intumescente.

L'invention est décrite de manière plus détaillée en faisant référence aux planches de dessin dans lesquelles :
- la figure 1 est un diagramme de fonctionnement d'une installation de déshydratation selon l'invention ;
- la figure 2 est une vue en perspective d'une partie d'un évaporateur mise en oeuvre selon l'invention ;
- la figure 3 montre en vue de dessus une section de l'évaporateur de la figure 2
- la figure 4 est à une échelle agrandie, une partie de la paroi de l'évaporateur ;
- la figure 5 présente schématiquement une installation discontinue pour la mise en oeuvre de l'invention
- la figure 6 présente une autre installation pour le traitement en discontinu.

Divers types d'appareillages peuvent être utilisés pour conduire la déshydratation. Le choix de ces appareillages est en partie fonction des volumes traités et de la nécessité qui en résulte de procéder de façon continue ou non.

Pour assurer la distribution renouvelée sur une paroi de récipient il est avantageux de faire en sorte que l'on maintienne un mouvement relatif de la paroi du récipient avec la composition, permettant la formation d'un film sur la paroi, lequel est en constante reformation. Le mouvement relatif est avantageusement de rotation, et à cet effet la surface du dispositif dans lequel la déshydratation est effectuée, présente une forme ordonnée suivant un axe de révolution. Il s'agit de préférence d'une forme principalement cylindrique ou tronconique, mais qui peut comprendre aussi un fond sphérique.

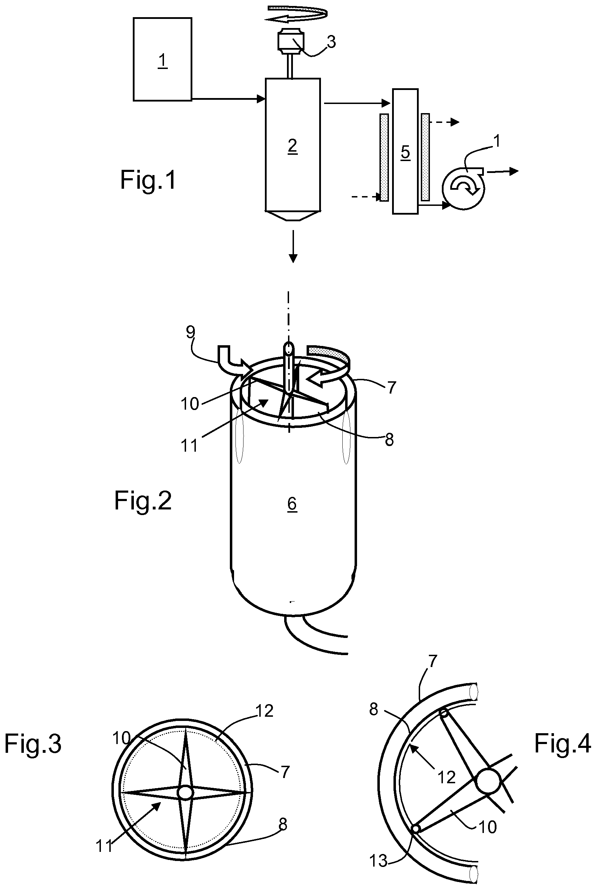

La figure 1 qui présente les éléments principaux d'une installation pour la déshydratation selon l'invention comprend une cuve de stockage 1 de la composition qui doit être soumise à déshydratation. Cette composition est envoyée par des moyens non représentés vers un évaporateur 2. L'alimentation de l'évaporateur est continue.

La composition passant sur les parois de l'évaporateur 2, est entrainée en un mouvement par un rotor animé par un moteur 3.

La composition s'écoule le long des parois internes de l'évaporateur en perdant une partie de sa teneur en eau. La composition déshydratée est récupérée en partie basse de l'évaporateur. Elle est ensuite acheminée jusqu'à son lieu d'utilisation. La mise en oeuvre ultérieure dans les vitrages anti-feu est réalisée dans un délai relativement bref qui tient compte de la rapidité de son évolution vers un gel.

Les parois de l'évaporateur sont chauffées de manière à maintenir la composition aux températures choisies pour favoriser la déshydratation. Avantageusement pour accélérer cette déshydratation l'enceinte de l'évaporateur est maintenue sous pression partielle entretenue à partir d'un système de pompe représenté en 4.

Le pompage conduit également l'eau de déshydratation depuis l'enceinte de l'évaporateur 2 vers le condenseur 5. Le condenseur est refroidi par exemple par circulation de fluide de réfrigération symbolisée par les flèches en tirets.

Les figures 2, 3 et 4 montrent de manière plus détaillée une construction possible de l'évaporateur favorisant la vitesse de l'évaporation. Dans l'ensemble cette disposition est destinée à maintenir la composition déshydratée sous forme d'une couche relativement peu épaisse, couche qui est renouvelée en permanence pour faciliter la présence à la surface d'une composition présentant une teneur en eau sensiblement homogène avec celle de l'ensemble de la composition. Cette disposition permet ainsi non seulement une évaporation aussi rapide que possible, mais par ailleurs évite le risque de trouver une teneur en eau si réduite qu'elle pourrait conduire localement à la formation du gel.

Dans sa forme générale des figures 2, 3 et 4 l'évaporateur 6 est constitué d'une enceinte cylindrique close, à doubles parois 7 et 8 entre lesquelles passe un fluide destiné à chauffer la paroi interne et, par son intermédiaire, la composition à déshydrater qui se trouve au contact de celle-ci.

La figure 2 montre l'enceinte ouverte à sa partie haute pour illustrer la disposition de ses composants principaux.

Dans la forme présentée la composition est introduite dans la partie haute de l'évaporateur, introduction schématisée par la flèche 9, de préférence suivant une direction tangente à la paroi. Du point d'introduction la composition longe par gravité la paroi chaude 8 de l'évaporateur. Elle est étalée sur la paroi au moyen des lames 10 d'un rotor 11 coaxial avec l'enceinte 6.

Les lames 10 du rotor sont éventuellement pourvues de moyens facilitant l'étalement de la composition en un film 12 (représenté en pointillé). Il peut s'agir de rubans souples disposés à l'extrémité des lames 10, et qui pressent la composition 12 sur la paroi 8.

Une autre disposition consiste à remplacer les lames 10 par un ensemble de rouleaux 13, maintenu à l'extrémité de bras supports se substituant aux lames précédentes 10. Les rouleaux sont montés de manière à maintenir sur toute la hauteur de l'évaporateur une légère pression sur les parois, ou plus exactement sur la composition recouvrant les parois en roulant sur celle-ci.

Par l'effet de la gravité et de la rotation des lames, la composition progresse suivant un mouvement de type hélicoïdal vers la partie basse de l'évaporateur où elle est récupérée.

L'élimination progressive d'une fraction de l'eau contenue dans la composition peut conduire à un accroissement limité de la viscosité. La pression exercée par les extrémités des lames 10 (rouleaux bandes souples ou moyens analogues) permet de maintenir la progression uniforme.

Les dimensions et conditions de fonctionnement de l'évaporateur sont réglées pour obtenir la teneur en eau désirée dans un temps de séjour dans l'évaporateur approprié.

Le débit, la température, la pression sont parmi les principaux facteurs qui influencent directement l'élimination de l'eau. Chacun d'eux offre dans certaines limites une manière d'influence sur le temps de séjour nécessaire.

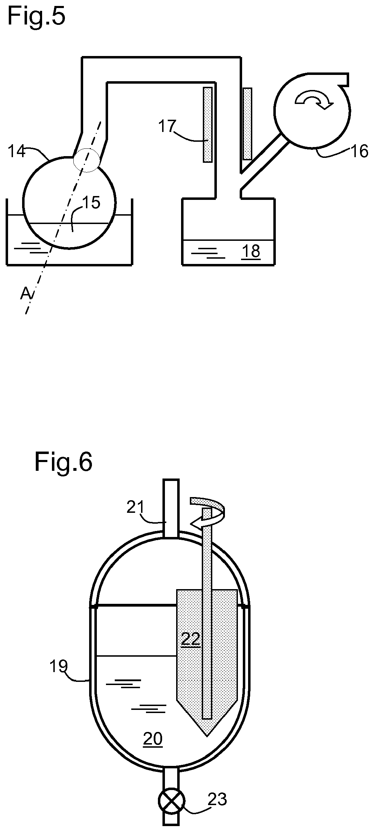

Un autre type d'appareillage est illustré de façon schématique à la figure 5. Le dispositif en question fonctionne de façon discontinue. Il comprend un ballon 14 contenant la composition 15 à déshydrater. Le ballon est monté de manière à pouvoir tourner sur lui-même suivant son axe A. L'articulation qui permet la rotation au niveau du col du ballon tout en assurant l'étanchéité n'est pas représentée.

Le ballon 14 est maintenu à température par exemple le plongeant dans un bain 16 chaud en offrant une température constante.

La rotation du ballon reforme à chaque tour un film de composition sur les parois favorisant à la fois l'évaporation et l'homogénéisation.

Comme précédemment la pression dans le ballon est réduite par pompage depuis la pompe 16. Simultanément l'eau évaporée de la composition 15 est acheminée jusqu'au dispositif de condensation 17. La mesure de l'eau condensée 18 permet de suivre la teneur en eau de la composition 15.

Un tel dispositif n'est effectivement utilisable que pour des productions limitées, ou pour des utilisations discrètes. Si une production abondante est requise, l'utilisation d'évaporateurs du type de ceux présentés aux figures précédentes s'impose.

D'autres systèmes discontinus fonctionnent sur des principes analogues mais présentent un ballon ou réservoir fixe dans lequel l'application de la composition sur les parois de ce réservoir est obtenue au moyen d'un ou plusieurs éléments rotatifs plongeant dans la composition et lui imposant une projection sur ces parois. Pour le reste les divers composants se retrouvent à savoir un ensemble permettant de chauffer la composition une aspiration évacuant la vapeur d'eau et maintenant une pression réduite dans le réservoir, et un système de condensation.

La figure 6 présente schématiquement un appareillage de ce type. L'enceinte à double parois 19 est chauffée par circulation d'un fluide caloporteur. La composition à déshydrater 20 est introduite en un lot. L'enceint chauffée est soumise à un vide partiel par aspiration à partir de la canalisation 21 d'évacuation de la vapeur d'eau. Les moyens de pompage et de condensation ne sont pas représentés. La composition chauffée 20, est agitée d'un mouvement de rotation au moyen de pales 22 qui contribuent à l'application de la composition sur les parois au dessus du niveau de la composition lorsque celle-ci est au repos. Cette distribution accroît la surface de contact de la composition avec les parois de l'enceinte et favorise aussi les échanges de conduction par le renouvellement constant de ce contact.

A la figure 6 un seul agitateur est représenté, mais plusieurs agitateurs peuvent être distribués à l'intérieur d'une même enceinte.

La déshydratation est contrôlée par exemple comme précédemment au moyen de l'eau de condensation récupérée. A la fin de l'opération la composition est soutirée par la vanne 23 située au fond de l'enceinte 19.

Un premier essai d'évaporation est conduit à partir d'une composition de silicate de potassium hydraté présentant une teneur en eau de 51% en poids. Le rapport molaire SiO₂/K₂O est de 4,6. La composition comporte 4% en poids d'éthylène glycol et 1% en poids de TMHA.

16,3kg de la composition sont placé dans le ballon rotatif de la figure 5. Le ballon est maintenu dans un bain à 50°C. La température dans la composition se maintien aux environ de 25°C du fait de l'énergie prélevée pour l'évaporation. Le ballon est mis en rotation à 70rpm.

Au niveau de la pompe la pression est de 8hPa. La pression dans le ballon est sensiblement plus élevée en raison de l'abondance de la vapeur d'eau qui s'en dégage. Elle est de l'ordre de 22hPa.

La condensation est conduite en faisant passer le courant de vapeur dans un condenseur refroidi par de l'eau à 5°C.

L'évaporation est maintenue jusqu'à obtention dans le ballon d'une composition dont la teneur en eau est de 38% en poids. L'opération est achevée après 105 minutes. Le poids de la composition n'est plus que de 12,96kg. L'eau récupérée dans le condenseur représente 3,2kg. L'eau non récupérée représente environ4%. Cette eau non condensée est entraînée avec les gaz pompés.

La composition obtenue reste stable pour autant qu'elle n'est pas chauffée au-delà de 50°C. Elle peut être conservée à 4°C pendant plusieurs jours sans gélifier. Ramenée à température ambiante (environ 24°C) sa prise en masse est obtenue en 8 heures.

Cette composition est avantageusement utilisée dans des vitrages anti-feu constitués par coulée de la composition sur une première feuille de verre. Après la solidification du silicate qui peut être accélérée par élévation de température, une deuxième feuille de verre est appliquée sur le gel. La fixation de la seconde feuille sur la composition de silicate est réalisée par exemple par passage à l'étuve ou par simple calandrage de façon connue en soi. La même composition peut aussi remplir un espace délimité entre deux feuilles, espace rendu étanche par un cordon réunissant les deux feuilles à leur périphérie.

L'essai précédent, partant d'une solution stable de silicate et présentant un rapport molaire SiO₂/K₂O relativement élevé, permet donc d'atteindre rapidement une composition qui ne nécessite plus de séchage et qui peut être mise en oeuvre dans un vitrage sans risque de gélification prématurée, le temps disponible étant largement suffisant.

Les conditions dans lesquelles la déshydratation est conduite peuvent varier dans des larges mesures. A titre indicatif, partant de la même composition que celle de l'essai rapporté ci-dessus, mais en maintenant la température du bain à 25°C au lieu de 50°C, la dépression étant conservée, la teneur en eau de 38% en poids est atteinte après 150 minutes.

Il est donc possible de modifier sensiblement les conditions auxquelles la composition est soumise. Ceci permet le cas échéant, pour des compositions qui auraient plus encore tendance à gélifier rapidement, par exemple des compositions qui pour une même teneur en eau présenteraient un rapport molaire SiO₂/K₂O plus élevé par exemple de 6 ou davantage, d'éviter leur prise en masse au cours de l'opération de déshydratation.

Toujours selon l'invention et pour un même rapport molaire cette fois, la déshydratation des conditions de température particulièrement peu élevées (éventuellement inférieure à la température ambiante) permet le cas échéant de poursuivre la déshydratation de manière plus poussée.

Un deuxième essai d'évaporation est conduit à partir d'une composition de silicate de potassium hydraté présentant une teneur en eau de 51% en poids. Le rapport molaire SiO₂/K₂O est de 4,6. La composition comporte 3.21% en poids d'éthylène glycol et 0.83% en poids de TMHA.

Un ballon contient 3kg de la composition qui est maintenue à 5°C. Une pompe calibrée prélève le produit à un débit de 1,8 kg/h et alimente un évaporateur de laboratoire à film raclé. L'huile qui circule dans la double enveloppe de l'évaporateur est chauffée à 80°C. Comme précédemment l'évaporation est suffisamment intense pour maintenir la température de la composition inférieure à 50°C. L'évaporateur est pourvu d'un condenseur interne dans lequel circule un fluide de refroidissement maintenu à 2°C. L'évaporateur est également connecté à une pompe qui ramène la pression à 12hPa.

L'évaporateur est muni d'un système de raclage à 3 rouleaux qui tourne à la vitesse de 20 rpm. Après environ 30 minutes de fonctionnement en régime, on récupère 715g de sol concentré dans le ballon collecteur latéral et 189g d'eau dans le ballon récolteur des condensats. Il n'y a pas eu de quantité d'eau mesurable dans le piège à eau située en aval du condenseur. Les condensats sont analysés et leur concentration en eau est supérieure à 99.5%.

Calculée par bilan matière, la concentration en eau du sol concentré est ramenée à près de 38%. La concentration en éthylène glycol est montée à 4% et celle en TMAH à 1%.

Le débit est continu. Le temps moyen de séjour du produit dans l'évaporateur a été mesuré. Il est compris entre 1 et 2 minutes.

La composition obtenue reste stable pour autant qu'elle n'est pas chauffée au-delà de 50°C. Elle peut être conservée à 4°C pendant plusieurs jours sans gélifier. Ramenée à température ambiante (environ 20°C) sa prise en masse est obtenue en environ 8 heures.

## Revendications

1. Préparation de compositions de silicates alcalins hydratés destinées à constituer des couches intumescentes de vitrages résistants au feu, lesdites compositions étant telles qu'appliquées entre des feuilles de verre, elles conduisent sans séchage à un gel solide, ces compositions étant obtenues à partir d'une solution stable et fluide comportant une teneur en eau initiale au plus de 60% et de préférence au plus de 55% en poids et dans laquelle le rapport molaire SiO₂/M₂O , M étant un métal alcalin, est compris entre 3 et 7 et de préférence entre 3 et 5. Solution qu'on soumet à une déshydratation partielle, la teneur en eau de la composition finale étant comprise entre 35 et 43% en poids, la déshydratation étant menée à une température limitée n'excédant à aucun moment 60°C, et de préférence pas 50°C, et sous pression réduite, la pression au-dessus de la composition à déshydrater étant de 1 à 100hPa, et de préférence de 1 à 20hPa, la déshydratation étant conduite en un temps inférieur à celui nécessaire pour la prise en masse de la composition finale.

2. Préparation selon la revendication précédente dans laquelle la déshydratation réduit la teneur pondérale en eau de la composition finale par rapport à la composition avant déshydratation d'au plus 14%.

3. Préparation selon l'une des revendications précédentes dans laquelle la déshydratation de la composition est conduite en maintenant la surface d'échange d'évaporation sous forme d'un film au contact de la paroi du dispositif évaporateur contenant la composition à déshydrater, l'épaisseur de ce film ne dépassant pas 3mm et de préférence pas 2mm.

4. Préparation selon la revendication précédente dans laquelle la formation du film de composition est continue par entretien d'un mouvement relatif de la composition et de la paroi du récipient.

5. Préparation selon la revendication 4 dans laquelle la formation du film sur les parois du récipient contenant la composition est assurée par un ensemble de rotatif d'éléments sensiblement parallèles aux parois du récipient de forme ordonnée autour d'un axe de révolution.

6. Préparation selon l'une quelconque des revendications précédentes dans laquelle, le suivi de la déshydratation de la composition est assuré par la mesure de la quantité d'eau évaporée et récupérée par condensation.

## Patentansprüche

1. Herstellung von Zusammensetzungen, die aus wasserhaltigen Alkalimetallsilicaten bestehen und dazu bestimmt sind, intumeszente Schichten von feuerfesten Verglasungen zu bilden, wobei die Zusammensetzungen derart beschaffen sind, dass sie bei einer Anwendung zwischen Glasscheiben ohne Trocknung ein feststoffliches Gel bilden, wobei die Zusammensetzungen ausgehend von einer stabilen und fließfähigen Lösung erhalten werden, welche anfänglich einen Wassergehalt von höchstens 60 und vorzugsweise höchstens 55 Gewichts-% aufweist und in welcher das Molverhältnis SiO₂/M₂O, wobei M für ein Alkalimetall steht, im Bereich von 3 bis 7 und vorzugsweise von 3 bis 5 liegt, die Lösung erfährt einen teilweisen Wasserentzug, wobei der Wassergehalt der gebrauchsfertigen Zusammensetzung im Bereich von 35 bis 43 Gewichts-% liegt, wobei die Temperatur bei der Durchführung des Wasserentzugs derart beschränkt wird, dass sie niemals 60 °C und vorzugsweise nicht 50 °C übersteigt, und der Druck dabei derart vermindert wird, dass der Druck oberhalb der Zusammensetzung, welcher Wasser entzogen werden soll, 1 bis 100 hPa und vorzugsweise 1 bis 20 hPa beträgt, wobei der Wasserentzug in einem Zeitraum durchgeführt wird, der kürzer als derjenige ist, welcher zur Verfestigung der gebrauchsfertigen Zusammensetzung erforderlich ist.

2. Herstellung nach dem vorhergehenden Anspruch, wobei der Wasserentzug den gewichtsmäßigen Wassergehalt der gebrauchsfertigen Zusammensetzung im Vergleich zur Zusammensetzung vor dem Wasserentzug um höchstens 14 % verringert.

3. Herstellung nach einem der vorhergehenden Ansprüche, wobei der Zusammensetzung derart Wasser entzogen wird, dass die Austauschfläche zur Verdampfung in Form einer Dünnschicht aufrechterhalten wird, die mit der Wand der Verdampfungsvorrichtung in Kontakt ist, welche die Zusammensetzung enthält, der Wasser entzogen werden soll, wobei diese Dünnschicht eine Dicke von 3 mm und vorzugsweise von 2 mm nicht überschreitet.

4. Herstellung nach dem vorhergehenden Anspruch, wobei die Bildung der Dünnschicht aus der Zusammensetzung kontinuierlich erfolgt, indem eine Relativbewegung der Zusammensetzung gegenüber der Wand des Behälters aufrechterhalten wird.

5. Herstellung nach Anspruch 4, wobei die Bildung der Dünnschicht auf den Wänden des Behälters, welcher die Zusammensetzung enthält, durch eine rotierende Einheit aus Elementen gewährleistet wird, die im Wesentlichen parallel zu den Wänden des Behälters sind und regelmäßig rundum eine Drehachse angeordnet sind.

6. Herstellung nach einem beliebigen der vorhergehenden Ansprüche, wobei der Wasserentzug aus der Zusammensetzung nachverfolgt wird, indem die Menge an Wasser gemessen wird, welche verdampft und durch Kondensation aufgefangen wird.

## Claims

1. Preparation of hydrated alkali metal silicate compositions intended to form intumescent layers of fire-resistant glazing units, said compositions being as applied between glass sheets, they result, without drying, in a solid gel, these compositions being obtained from a stable and fluid solution comprising an initial water content of at most 60% and preferably of at most 55% by weight and wherein the SiO₂/M₂O molar ratio, M being an alkali metal, is between 3 and 7 and preferably between 3 and 5; which solution is subjected to a partial dehydration, the water content of the final composition being between 35% and 43% by weight, the dehydration being carried out at a limited temperature that does not at any time exceed 60°C, and preferably does not exceed 50°C, and under reduced pressure, the pressure above the composition to be dehydrated being from 1 to 100 hPa, and preferably from 1 to 20 hPa, the dehydration being carried out in a shorter time than that required for the setting of the final composition.

2. Preparation according to the preceding claim, wherein the dehydration reduces the weight content of water of the final composition compared to the composition before dehydration by 14% at most.

3. Preparation according to one of the preceding claims, wherein the dehydration of the composition is carried out by maintaining the evaporation exchange surface in the form of a film in contact with the wall of the evaporator device containing the composition to be dehydrated, the thickness of this film not exceeding 3 mm and preferably not exceeding 2 mm.

4. Preparation according to the preceding claim, wherein the formation of the film of composition is continuous by maintaining a relative movement of the composition and of the wall of the container.

5. Preparation according to Claim 4, wherein the formation of the film on the walls of the container containing the composition is carried out by a rotational assembly of elements substantially parallel to the walls of the container having a shape arranged around an axis of revolution.

6. Preparation according to any one of the preceding claims, wherein the dehydration of the composition is monitored by measuring the amount of water evaporated and recovered by condensation.
